# EUROPÄISCHE PATENTANMELDUNG

(11) **EP 1 515 171 A1**
(43) Veröffentlichungstag der Anmeldung: **16.03.2005**
(21) Anmeldenummer: 04292064.5
(22) Anmeldetag: 19.08.2004
(51) Int. Cl.: G02B 6/44

(54) **Verfahren zur Herstellung einer Verzweigung für optische Kabel**

(30) Priorität: 12.09.2003 DE 10342165
(71) Anmelder: Nexans, 75008 Paris (FR)
(72) Erfinder: Grögl, Ferdinand, Dipl.-Ing., 90403 Nürnberg (DE); Mann, Thomas, Dipl.-Ing., 91367 Weissenohe (DE)
(74) Vertreter: Döring, Roger, Dipl.-Ing.

(57) **Zusammenfassung**

Ein Verfahren zur Herstellung einer Verzweigungseinrichtung für ein mehradriges Lichtwellenkabel, welches aufweist
ein oder mehrere Bündeladern mit in einer Aderhülle angeordnete optische Fasern mehrere die Bündeladern konzentrisch umgebende Armierungselemente sowie einen Außenmantel
weist folgende Merkmale auf:
a) Entfernen des Außenmantel sowie der Armierungselemente über eine bestimmte Länge von einem Ende des Kabels.
b) Freilegen der Armierungselemente durch Entfernen des Außenmantels über eine bestimmte Länge vom Ende des Kabels.
c) Freilegen der optischen Fasern durch Entfernen der Aderhülle über eine bestimmte Länge vom Ende der Bündelader (n).
d) Bereitstellen mehrerer Leerrohre, bestehend aus einem Kunststoffröhrchen, einer Lage aus Armierungselementen sowie einem Kunststoffmantel.
e) Freilegen der Armierungselemente der Leerrohre durch Entfernen des Kunststoffmantels.
f) Aufschieben der Leerrohre auf die optischen Fasern bis in das Innere der Aderhülle, so daß die optischen Fasern aus dem Leerrohr herausragen.
g) Auflegen der Armierungselemente der Leerrohre auf die Lage der Armierungselemente des Bündeladerkabels und Fixieren aus der Lage der Armierungselemente des Bündeladerkabels.

## Beschreibung

Die Erfindung betrifft ein Verfahren zur Herstellung einer Verzweigungseinrichtung für ein mehradriges Lichtwellenleiterkabel.

Es sind Lichtwellenleiterkabel bekannt, welche eine zentrale Bündelader mit mehreren Lichtwellenleitern, einen auf der Oberfläche der Bündelader angeordneten Stauchschutz und einem über dieser Armierung angeordneten Außenmantel aufweisen. Will man eine Aufteilung an diesem Kabel vornehmen, werden sogenannte Breakoutcables" herangezogen, welche aus miteinander verseilten Einfaserkabeln bestehen, um die ein gemeinsamer Kunststoffmantel extrudiert ist. Die Faserzahl des Breakoutkabels ist mit der Faserzahl des Lichtwellenleiterkabels identisch. Beim Konfektionierungsprozeß werden unter Einsatz eines teuren Aufteilelementes z. B. einer Aufteilferrule die einzelnen Lichtwellenleiter der Bündelader mit den Lichtwellenleitern des Breakoutkabels verschweißt. Dies ist eine kostspielige Vorgehensweise. Darüberhinaus ist eine Verbindung von Lichtwellenleitern durch Schweißen nicht einfach vor Ort herzustellen.

Der vorliegenden Erfindung liegt die Aufgabe zugrunde, eine Verzweigungsstelle bereitzustellen, welche ohne Verschweißen der Lichtwellenleiter auskommt und kostengünstiger herstellbar ist.

Diese Aufgabe wird durch die im Anspruch 1 erfaßten Merkmale gelöst.

Weitere vorteilhafte Ausgestaltungen der Erfindung sind in den Unteransprüchen beschrieben.

Der wesentliche Vorteil der Erfindung ist darin zu sehen, daß nach Fertigstellung der Verzweigungseinrichtung in einfacher Weise handelsübliche Lichtwellenleiterstecker an die Enden der Lichtwellenleiter angebracht werden können.

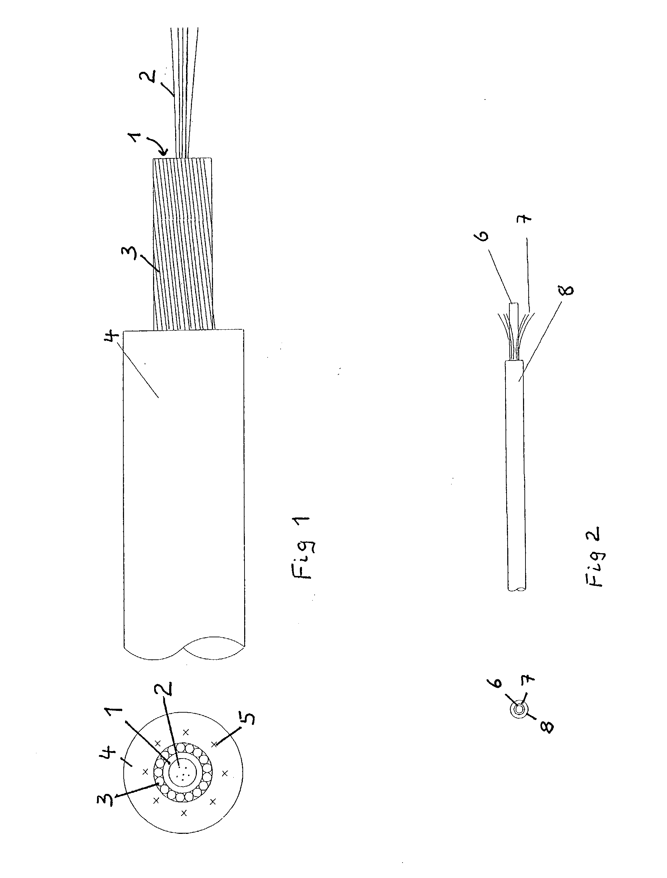

Die Erfindung ist anhand der in den Figuren 1 bis 3 schematisch dargestellten Ausführungsbeispiels näher erläutert.

In der Figur 1 ist ein Lichtwellenleiterkabel dargestellt, welches aus einer Bündelader 1 mit mehreren Lichtwellenleitern 2, einer auf die Bündelader 1 aufgeseilten Lage 3 aus zug- und stauchstabilen Elementen sowie einem Außenmantel 4 besteht. Die Bündelader 1 kann beispielsweise sechs Lichtwellenleiter 2 enthalten. Jeder Lichtwellenleiter 2 besteht aus einer optischen Faser mit einem sogenannten Coating. Der Durchmesser der Lichtwellenleiter 2 beträgt beispielsweise 0,23 mm. Die Hülle der Bündelader 1 hat einen Außendurchmesser von z. B. 3,0 mm und eine Wanddicke von 0,4 mm. Die Hülle der Bündelader 1 besteht aus einem thermoplastischen Kunststoff z. B. Polyamid, Polybutylen oder ähnlichen Werkstoffen.

Die Elemente der Lage 3 sind vorzugsweise sogenannte GfK-Elemente als Stauchschutz mit einem Durchmesser von 1,0 mm, die mit großer Schlaglänge auf die Aderhülle 1 aufgeseilt sind. Die Schlaglänge der Stauchschutzelemente ist so gewählt, daß bei Dauerbiegebeanspruchungen mit festgelegten Biegeradien weder die Stauchschutzelemente noch die Lichtwellenleiterfasern Schaden nehmen. Der Außenmantel 4 ist bevorzugt zweischichtig aufgebaut und besteht aus einer nicht näher bezeichneten Innenschicht aus Polyurethan mit einer Wanddicke von in etwa 1,0 mm. Die nicht näher bezeichnete Außenschicht des Außenmantels 4 besteht ebenfalls aus Polyurethan und hat eine Wanddicke von 1,8 mm. Zwischen der Innenschicht und der Außenschicht des Außenmantels befindet sich noch ein Torsionsschutz 5, der aus Kunststoff-Multifilamenten z. B. aus Polyester, Polyaramid oder Kunstseide in Form eines Geflechtes auf die Innenschicht des Außenmantels 4 aufgebracht ist. Ein solches Kabel ist bekannt und hat beispielsweise einen Durchmesser von 12,5 mm.

Zur Herstellung einer Verzweigungseinrichtung wird bei dem Kabel wie in Figur 1 dargestellt, zunächst der Außenmantel 4, die Lage 3 aus Stauchschutzelementen sowie die Bündeladerhülle entfernt, so daß nur noch die Lichtwellenleiter 2 in einer bestimmten Länge aus dem Kabelende herausragen. Sodann wird der Außenmantel 4 über mehrere Zentimeter bis zu der Lage 3 aus Stauchschutzelementen abgesetzt (Figur 1).

In einem nächsten Schritt wird über die aus der Aderhülle herausragenden Lichtwellenleiter 2 jeweils ein Leerrohr geschoben. Dieses Leerrohr ist in Figur 2 schematisch dargestellt. Das Leerrohr besteht aus einem Innenrohr, einer auf dem Innenrohr 6 aufliegenden Lage 7 aus Stauchschutzelementen sowie einem Außenmantel 8. Das Innenrohr 6 besteht vorzugsweise aus Polyamid und hat einen Außendurchmesser von 0,7 mm und eine Wanddicke von 0,15 mm. Die Stauchschutzelemente der Lage 7 bestehen aus Glas oder Aramid und verlaufen entweder parallel zur Längsachse des Leerrohres oder sind in Form einer Umseilung auf das Innenrohr 6 aufgebracht. Der Außenmantel 8 besteht z. B. aus Polyurethan und weist einen Außendurchmesser von 2,2 mm auf. Vor dem Aufschieben auf die Lichtwellenleiter 2 wird der Mantel 8 des Leerrohres abgesetzt und das Innenrohr 6 und die Lage 7 aus Stauchschutzelementen freigelegt.

Jeder Lichtwellenleiter 2 des Lichtwellenleiterkabels nach Figur 1 wird in ein Leerrohr eingefädelt und zwar von abgesetzten Ende des Leerrohrs aus.

Dabei wird das Innenrohr 6 des Leerrohres über eine bestimmte Länge in die Aderhülle eingeschoben und die Lage 7 der Stauchschutzelemente auf die Armierungslage 3 des Kabels aufgelegt. Zentral in der Bündelader 1 angeordnet wird ein nicht näher bezeichnetes Bündelelement aus Kunststoff oder Gummi eingesetzt. Die Länge des Leerrohres wird so gewählt, daß das Ende der Lichtwellenleiter das Leerrohrende überragt.

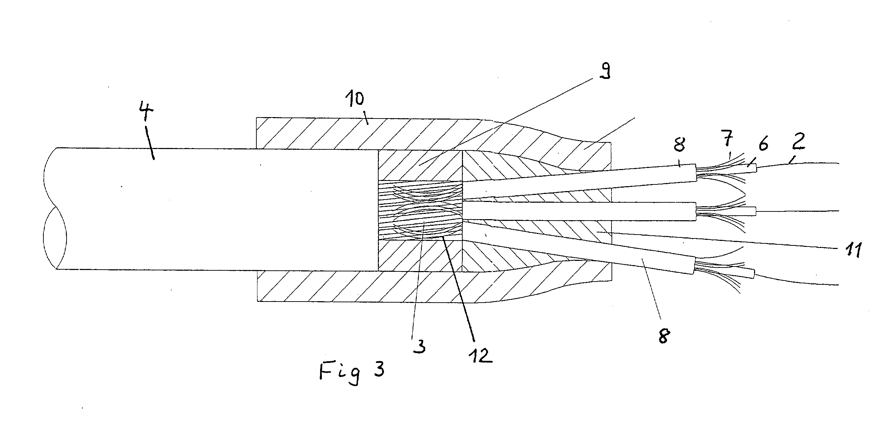

Wie aus Figur 3 ersichtlich wird mittels eines Crimpverbinders 9 die Lage 7 aus Stauchschutzelementen mechanisch fest mit der Armierungslage 3 des Kabels verbunden (Bezugszeichen 12). Über das Ende des Kabels wird sodann ein Schrumpfschlauch 10 geschoben und eine Dichtmasse 11 in die zwischen den Leerrohren verbliebenen Spalte eingebracht. Anschließend wird der Schrumpfschlauch 10 durch Erwärmen zum Schrumpfen gebracht.

Zum Anbringen von Steckern z. B. ST-Steckern an die Enden der Leerrohre mit den eingefädelten Lichtwellenleitern wird nach bereits bekannter und praktizierter Montagetechnik verfahren (s. rechte Spalte der Figur 3).

## Patentansprüche

1. Verfahren zur Herstellung einer Verzweigungseinrichtung für ein mehradriges Lichtwellenkabel, welches aufweist
ein oder mehrere Bündeladern mit in einer Aderhülle angeordnete optische Fasern mehrere die Bündeladern konzentrisch umgebende Armierungselemente sowie einen Außenmantel
mit folgenden Merkmalen:
a) Entfernen des Außenmantel sowie der Armierungselemente über eine bestimmte Länge von einem Ende des Kabels.
b) Freilegen der Armierungselemente durch Entfernen des Außenmantels über eine bestimmte Länge vom Ende des Kabels.
c) Freilegen der optischen Fasern durch Entfernen der Aderhülle über eine bestimmte Länge vom Ende der Bündelader (n).
d) Bereitstellen mehrerer Leerrohre, bestehend aus einem Kunststoffröhrchen, einer Lage aus Armierungselementen sowie einem Kunststoffmantel.
e) Freilegen der Armierungselemente der Leerrohre durch Entfernen des Kunststoffmantels.
f) Aufschieben der Leerrohre auf die optischen Fasern bis in das Innere der Aderhülle, so daß die optischen Fasern aus dem Leerrohr herausragen.
g) Auflegen der Armierungselemente der Leerrohre auf die Lage der Armierungselemente des Bündeladerkabels und Fixieren aus der Lage der Armierungselemente des Bündeladerkabels.

2. Verfahren nach Anspruch 1, **dadurch gekennzeichnet, daß** bis zu sechs Leerrohre über die sechs optischen Fasern und in die Aderhülle geschoben werden.

3. Verfahren nach Anspruch 1 oder 2, **dadurch gekennzeichnet, daß** die Schritte a, b, c in einem Arbeitsschritt durchgeführt werden.

4. Verfahren nach einem der Ansprüche 1 bis 3, **dadurch gekennzeichnet, daß** die Armierungselemente der Leerrohre auf der Lage der Armierungselemente des Lichtwellenleiterkabels durch ein rohrförmiges Crimpelement festgelegt werden.

5. Verfahren nach einem der Ansprüche 1 bis 4, **dadurch gekennzeichnet, daß** in das Ende der Aderhülle zusätzlich ein Rundelement eingeschoben wird.

6. Verfahren nach einem der Ansprüche 1 bis 5, **dadurch gekennzeichnet. daß** der Übergangsbereich Aderhülle/Leerrohre abgedichtet wird,

7. Verfahren nach Anspruch 6, **dadurch gekennzeichnet, daß** auf den Übergangsbereich eine Dichtmasse aufgebracht und der Übergangsbereich durch einen Schrumpfschlauch abgedichtet wird.

8. Verfahren nach einem der Ansprüche 6 bis 7, **dadurch gekennzeichnet, daß** der Übergangsbereich durch Überschieben eines Schrumpfschlauches mit einer inneren Beschichtung aus Dichtmasse und anschließendes Schrumpfen des Schrumpfschlauches abgedichtet wird.
